# FASCICULE DE BREVET EUROPEEN

(11) **EP 3 455 044 B1**
(45) Date de publication et mention de la délivrance du brevet: **07.10.2020**
(21) Numéro de dépôt: 17721746.0
(22) Date de dépôt: 10.05.2017
(51) Int. Cl.: B29C 33/06, B29C 33/30, B29C 70/34, B29C 35/08

(54) **DISPOSITIF ET PROCÉDÉ POUR LE MOULAGE ET LA CONSOLIDATION D'UNE PRÉFORME TEXTILE**
VORRICHTUNG UND VERFAHREN ZUM FORMEN UND KONSOLIDIEREN EINER TEXTILEN VORFORM
DEVICE AND METHOD FOR MOULDING AND CONSOLIDATING A TEXTILE PREFORM

(30) Priorité: 10.05.2016 FR 1670220
(43) Date de publication de la demande: 20.03.2019
(73) Titulaire: Roctool, 73370 Le Bourget du Lac (FR)
(72) Inventeur: FEIGENBLUM, José, 73170 Saint Paul (FR)
(74) Mandataire: Ipside
(86) Numéro de dépôt international: PCT/EP2017/061240
(87) Numéro de publication internationale: WO 2017/194640

(56) Documents cités:
- FR-A1- 3 015 919
- US-A- 5 002 476
- US-A- 5 410 132
- US-A- 5 556 565

## Description

L'invention concerne un dispositif et un procédé pour le moulage et la consolidation d'une préforme textile. L'invention appartient au domaine de la consolidation/cuisson d'une préforme constituée d'une stratification de plis fibreux préimprégnés d'un polymère thermodurcissable ou thermoplastique.

Selon l'art antérieur, les plis constituant la préforme sont drapés manuellement ou au moyen d'une machine de drapage sur une matrice reproduisant la forme de la pièce à obtenir. Les techniques de drapage de plis préimprégnés d'un polymère thermodurcissable ou thermoplastique sont connues de l'art antérieur et ne sont pas exposées plus avant. À l'issue du drapage, la stratification obtenue et la matrice sont ensachées de manière étanche par une bâche. L'intérieur de ladite bâche, comprenant la préforme textile, est tiré au vide et placée soit en étuve soit en autoclave, afin de porter l'ensemble préforme, matrice et ensachage à une température de consolidation ou de cuisson sous pression.

Tant l'autoclave que l'étuve sont fréquemment des moyens uniques de production dans un atelier de fabrication et constituent des étranglement dans le flux de production, plus particulièrement en matière de composites à matrice thermodurcissable dont la résine présente un temps ouvert fini pour la réalisation de la cuisson. De plus, la montée en température de l'ensemble constitué de l'outillage et de la préforme jusqu'à la température de cuisson/consolidation est long dans de tels moyens.

Aussi, de nombreux outillages autonomes, comprenant leurs propres moyens de chauffage ont été développés. Lesdits dispositifs comprennent des moyens de chauffage intégrés, sous la forme de résistances électriques, de conduits de circulation d'huile, ou d'inducteurs. Cependant, l'intégration de ces moyens de chauffage dans l'outillage est coûteuse en termes d'usinage.

Le document WO2015/155369 décrit un dispositif de cuisson/consolidation d'une préforme textile, à chauffage autonome et à matrice interchangeable. Ce dispositif de l'art antérieur est plus particulièrement adapté à la réalisation d'une pièce de grande dimension mais reste complexe dans sa conception pour y intégrer les moyens de chauffage et de refroidissement en ce qui concerne des pièces de plus petites dimensions, dont la surface est inférieure ou égale à environ 1m².

Le document US 5 410 132 divulgue un dispositif adapté pour la cuisson/consolidation d'une préforme textile préimprégnée d'un polymère, ledit dispositif comprenant une matrice, dépourvue de moyens de chauffage et de refroidissement, comprenant une face moulante reproduisant la forme de la préforme textile et une interface de montage; un moyen de mise en place étanche de la préforme sur la matrice; des moyens d'application de pression; un bloc thermique, comprenant des moyens de chauffage par induction et une interface de réception coopérant avec l'interface de montage de la matrice pour son positionnement et le transfert de chaleur entre ladite matrice et ledit bloc thermique.

L'invention vise à résoudre les inconvénients de l'art antérieur et concerne à cette fin un dispositif pour la cuisson/consolidation d'une préforme textile préimprégnée d'un polymère selon l'objet de la revendication 1.

Ainsi, les moyens de chauffage ne sont pas portés par la matrice qui reste simple de réalisation. L'interface de montage permet d'utiliser le même bloc thermique pour une pluralité d'outillages.

L'invention est avantageusement mise en oeuvre selon les modes de réalisation et les variantes exposés ci-après, lesquels sont à considérer individuellement ou selon toute combinaison techniquement opérante.

Avantageusement, le bloc thermique comprend des moyens de refroidissement
Selon un mode de réalisation plus particulièrement adapté à la cuisson d'une préforme textile préimprégnée d'une résine thermodurcissable, le dispositif objet de l'invention comprend :
e. une enceinte étanche et des moyens de verrouillage de ladite enceinte sur la matrice ;
f. des moyens pour monter la pression à l'intérieur de l'enceinte étanche

Le bloc thermique du dispositif objet de l'invention comprend :
di. un support comprenant l'interface de réception et une interface de chauffage ;
dii. un accumulateur thermique, chauffé par les moyens de chauffage par induction ;
diii. des moyens pour communiquer la chaleur de l'accumulateur thermique au support par l'interface de chauffage.

Ce mode de réalisation permet de limiter le besoin en puissance électrique pour l'alimentation des moyens de chauffage du bloc thermique tout en bénéficiant des avantages du chauffage par induction.

Avantageusement, les moyens de refroidissement comprennent un circuit pour la circulation d'un fluide caloporteur dans le support.

Avantageusement, les moyens de refroidissement comprennent un circuit pour la circulation d'un fluide caloporteur autour de l'accumulateur thermique.

Avantageusement, l'interface de chauffage comporte une feuille de conformation. Ainsi, ladite feuille de conformation assure une contact mécanique parfait au niveau de l'interface de chauffage et réduit la résistance thermique de contact entre l'accumulateur thermique et le support.

De manière similaire, l'interface de montage de la matrice comprend une feuille de conformation.

L'invention concerne également un procédé pour la cuisson ou la consolidation d'une préforme textile préimprégnée d'un polymère, mettant en oeuvre le dispositif objet de l'invention selon l'un quelconque de ses modes de réalisation, lequel procédé comprend les étapes consistant à :
i. ensacher la préforme préalablement drapée sur la matrice ;
ii. tirer au vide l'intérieur de l'ensachage :
iii. transférer la matrice et la préforme ensachée sur le bloc thermique ;
iv. faire subir à la préforme un cycle thermique de cuisson consolidation en régulant la température de la préforme par le chauffage et le refroidissement du bloc thermique

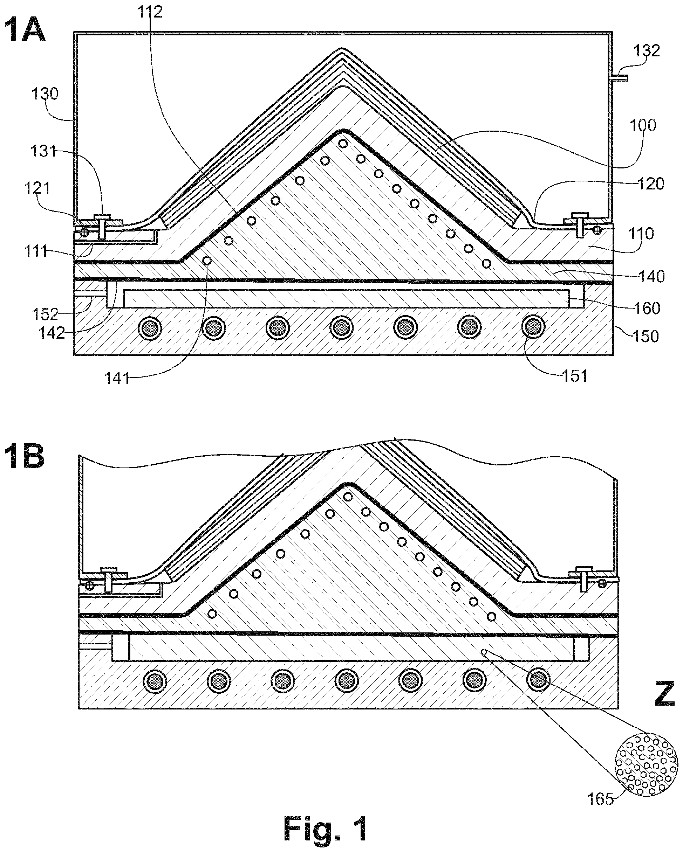

Selon un mode de mise en oeuvre adapté à la cuisson d'une préforme textile imprégnée d'un polymère thermodurcissable, le procédé objet de l'invention comprend entre les étapes ii) et iv) une étape consistant à accroître la pression dans l'enceinte étanche
L'invention est exposée ci-après selon ses modes de réalisation préférés, nullement limitatifs, et en référence à la figure 1, représentant selon des vues en coupe le dispositif objet de l'invention dans un mode de réalisation regroupant l'ensemble des caractéristiques optionnelles de celui-ci. Figure 1A en phase de refroidissement et figure 1B en phase de chauffage.

Selon cet exemple de réalisation, le dispositif objet de l''invention comprend une matrice (110) sur laquelle est drapée une préforme textile (100) consistant en une stratification de plis fibreux pré-imprégnés d'un polymère thermodurcissable ou thermopastique. Ladite préforme (100) est ensachée sur la matrice (110) par l'intermédiaire d'une bâche à vide (120), mettant en oeuvre des moyens d'étanchéité (121) de sorte que l'espace compris entre la matrice (110) et la bâche à vide, comprenant la préforme (100) est étanche. Selon cet exemple de réalisation, la matrice (110) comprend des conduits (111) débouchant dans ledit espace, lesquels conduits sont connectés à une pompe aspirante (non représentée) de sorte à tirer cet espace au vide. Une enceinte étanche (130) ensérant la préforme est verrouillée à la matrice par des moyens d'assemblage (132) appropriés. Ladite enceinte comprend un conduit (132) connecté à une pompe afin d'augmenter la pression dans ladite enceinte. Ainsi, cet ensemble supérieur comprenant la matrice (110) les moyens d'ensachage et l'enceinte étanche constitue un ensemble autonome, permettant la mise en oeuvre du cycle de pression correspondant à la consolidation/cuisson de la préforme textile.

La réalisation du cycle thermique de consolidation/cuisson de la préforme textile est obtenue en posant l'ensemble supérieur sur un bloc thermique, lequel bloc thermique comprend, selon cet exemple de réalisation :
- un support (140) constitué d'un matériau présentant une bonne conductivité thermique, par exemple, un alliage d'aluminium ;
- un base (150) préférentiellement constituée d'un matériau réfractaire transparent au champ magnétique, par exemple, un béton ou une céramiquee ;
- un accumulateur (160) thermique constitué d'un matériau apte à être chauffé par induction.

La base comprend un circuit d'induction comprenant un ou plusieurs inducteurs (151) circulant dans des cavités pratiquées dans ladite base, et connectés à un générateur de courant à haute fréquence, typiquement comprise entre 10 kHz et 100 kHz.

Le support (140) comprend des canaux (141) pour la circulation d'un fluide caloporteur permettant de refroidir ledit support. La matrice est connectée au support (140) par l'intermédiaire d'une interface de profil standard, de sorte qu'une pluralité d'ensembles supérieurs, correspondant à une même forme ou à des formes différentes est susceptible de prendre position sur le boc thermique. La surface de montage de la matrice, surface qui assure le positionnement de ladite matrice sur la surface de réception du support (140), comporte avantageusement une feuille de conformation (112). Ladite feuille de conformation est par exemple brasée sur la surface d'assemblage de la matrice et est constituée d'un matériau présentant une bonne conductivité thermique mais malléable, tel que du cuivre ou du nickel, de sorte que ladite feuille de conformation compense les légères différences de forme entre la surface d'assemblage de la matrice et la surface de réception du support (140).

Sur la face opposée à la face de réception, le support comprend une surface de chauffage susceptible d'entrer en contact avec l'accumulateur thermique. Avantageusement la surface de chauffage comprend une feuille de conformation (142), brasée à ladite surface de chauffage, et apte à compenser les légers écarts de forme entre ledit accumulateur (160) et la surface de chauffage du support (140). Figure 1A, en l'absence de chauffage, l'accumulateur (160) n'est pas en contact avec la surface de chauffage. Toutefois, ledit accumulateur (160) est néanmoins maintenu à une température dite de maintien par l'intermédiaire des inducteurs. La résistance de contact entre l'accumulateur (160) et la surface de chauffage est élevée et le transfert thermique entre l'accumulateur thermique (160) et le support (140) est réduit.

Figure 1B, au cours d'un chauffage, la température de l'accumulateur est augmentée, de sorte que celui-ci se dilate thermiquement et entre en contact avec la surface de chauffage du support (140). La résistance de contact baisse, et l'accumulateur thermique transmet sa chaleur au support. Ledit accumulateur thermique (160) n'a pas de fonction structurale dans le dispositif objet de l'invention. Sa constitution est ainsi choisie pour optimiser sa réponse au chauffage par induction et sa capacité de transférer sa chaleur au support (140).

Selon un mode de réalisation particulier, détail Z, ledit accumulateur est de structure alvéolaire, chaque alvéole (165) étant remplie d'un matériau à changement phase présentant une chaleur latente de transition . Avantageusement, le matériau à changement de phase est choisi de sorte que sa température de transition soit proche de la température de maintien de l'accumulateur thermique. À titre d'exemple, si la température de maintien est de l'ordre de 200 °C le matériau à changement de phase est par exemple un matériau organique comme un polyol. Si la température de maintien est plus élevée, par exemple de l'ordre de 400 °C, ou plus, le matériau à changement de phase est par exemple un sel. Selon ces exemples, le matériau à changement de phase passe de l'état solide, à basse température, à l'état liquide à température plus élevée en absorbant une chaleur latente de transition. En passant de la phase haute température à la phase basse température le matériau à changement de phase se solidifie et restitue ladite chaleur latente de transition. La combinaison de la structure alvéolaire et de la présence d'un matériau à changement de phase permet d'augmenter l'inertie thermique apparente de l'accumulateur thermique (160) pendant son maintien à la température de maintien, toute en conservant une capacité de chauffage rapide jusqu'à la température de chauffage.

Le refroidissement de la matrice, et par suite de la préforme, est réalisé par la circulation du fluide caloporteur dans les canaux (141) du support. Avantageusement, la base (150) comprend des conduits (152) pour l'adduction d'un fluide caloporteur autour de l'accumulateur thermique (160) de sorte à accélérer son refroidissement jusqu'à sa température de maintien après la phase de chauffage et de maintien en température de la matrice.

## Revendications

1. Dispositif pour la cuisson ou la consolidation d'une préforme textile (100) préimprégnée d'un polymère, ledit dispositif comprenant:
a. une matrice (110) dépourvue de moyens de chauffage et de refroidissement, comprenant une face moulante reproduisant la forme de la préforme textile et une surface de montage ;
b. un ensachage (120) étanche de la préforme sur la matrice ;
c. des moyens (111) de tirage au vide de l'intérieur de l'ensachage comprenant la préforme textile ;
d. un bloc thermique, comprenant une base (150) comprenant un circuit d'induction comportant un ou plusieurs inducteurs (151) circulant dans des cavités pratiquées dans ladite base (150), et connectés à un générateur de courant à haute fréquence et comprenant :
di. un support (140) comprenant une surface de réception coopérant avec la surface de montage de la matrice pour le positionnement de la matrice (110) sur ledit support (140) et le transfert de chaleur entre ladite matrice et ledit bloc thermique, et une surface de chauffage sur une face opposée à la surface de réception ;
dii. un accumulateur thermique (160) en contact avec la base, chauffé par le circuit d'induction de ladite base ;
diii. des moyens pour communiquer la chaleur de l'accumulateur thermique (160) au support (140) par la surface de chauffage dudit support (140).

2. Dispositif selon la revendication 1, dans lequel le bloc thermique comprend des moyens (141) de refroidissement.

3. Dispositif selon la revendication 1, comprenant :
e. une enceinte (130) étanche et des moyens de verrouillage (131) de ladite enceinte sur la matrice (110) ;
f. des moyens (132) pour monter la pression à l'intérieur de l'enceinte étanche (130).

4. Dispositif selon la revendication 2, dans lequel les moyens de refroidissement comprennent un circuit (141) pour la circulation d'un fluide caloporteur dans le support (140).

5. Dispositif selon la revendication 2, dans lequel les moyens de refroidissement comprennent un circuit pour la circulation d'un fluide caloporteur autour de l'accumulateur thermique (160).

6. Dispositif selon la revendication 4, dans lequel la surface de chauffage du support (140) comporte une feuille de conformation (142).

7. Dispositif selon l'une quelconque des revendications 1 à 6, dans lequel la surface de montage de la matrice (110) comprend une feuille de conformation (112).

8. Procédé pour la cuisson ou la consolidation d'une préforme textile (100) préimprégnée d'un polymère, mettant en oeuvre un dispositif selon l'une quelconque des revendications précédentes, ledit procédé comprenant les étapes consistant à :
i. ensacher la préforme (100) préalablement drapée sur la matrice (110) ;
ii. tirer au vide l'intérieur de l'ensachage :
iii. transférer la matrice et la préforme ensachée sur le bloc thermique ;
iv. faire subir à la préforme un cycle thermique de cuisson consolidation en régulant la température de la préforme par le chauffage et le refroidissement du bloc thermique (160).

9. Procédé selon la revendication 8, mettant en oeuvre un dispositif selon la revendication 3, comprenant, entre les étapes ii) et iv) une étape consistant à accroître la pression dans l'enceinte étanche (130).

## Patentansprüche

1. Vorrichtung zum Brennen oder Verfestigen einer textilen Vorform (100), die mit einem Polymer vorimprägniert ist, wobei die Vorrichtung umfasst:
a. eine Matrize (110), die keine Mittel zum Heizen und Abkühlen aufweist, umfassend eine formende Fläche, welche die Form der textilen Vorform wiedergibt, und eine Montageoberfläche;
b. eine dichte Einsackung (120) der Vorform auf der Matrize;
c. Mittel (111) zum Vakuumieren des Inneren der Einsackung, welche die textile Vorform umfasst;
d. einen thermischen Block, umfassend einen Sockel (150), der einen Induktionskreis mit einem oder mehreren Induktoren (151) umfasst, die in Hohlräumen zirkulieren, die in dem Sockel (150) ausgeführt sind, und die mit einem Hochfrequenzstromgenerator verbunden sind, und umfassend:
di. einen Träger (140), umfassend eine Aufnahmeoberfläche, die mit der Montageoberfläche der Matrize für die Positionierung der Matrize (110) auf dem Träger (140) und die Wärmeübertragung zwischen der Matrize und dem thermischen Block zusammenwirkt, und eine Heizoberfläche auf einer Fläche, die der Aufnahmeoberfläche gegenüberliegt;
dii. einen Wärmespeicher (160) in Kontakt mit dem Sockel, der durch den Induktionskreis des Sockels geheizt wird;
diii. Mittel zum Übermitteln der Wärme des Wärmespeichers (160) an den Träger (140) durch die Heizoberfläche des Trägers (140).

2. Vorrichtung nach Anspruch 1, wobei der thermische Block Kühlmittel (141) umfasst.

3. Vorrichtung nach Anspruch 1, umfassend:
e. ein dichtes Gehäuse (130) und Verriegelungsmittel (131) des Gehäuses auf der Matrize (110);
f. Mittel (132) zum Erhöhen des Drucks im Inneren des dichten Gehäuses (130).

4. Vorrichtung nach Anspruch 2, wobei die Kühlmittel einen Kreislauf (141) für die Zirkulation eines Wärmeträgerfluids in dem Träger (140) umfassen.

5. Vorrichtung nach Anspruch 2, wobei die Kühlmittel einen Kreislauf für die Zirkulation eines Wärmeträgerfluids um den Wärmespeicher (160) umfassen.

6. Vorrichtung nach Anspruch 4, wobei die Heizoberfläche des Trägers (140) ein Formblatt (142) aufweist.

7. Vorrichtung nach einem der Ansprüche 1 bis 6, wobei die Montageoberfläche der Matrize (110) ein Formblatt (112) umfasst.

8. Verfahren zum Brennen oder Verfestigen einer textilen Vorform (100), die mit einem Polymer vorimprägniert ist, unter Verwendung einer Vorrichtung nach einem der vorstehenden Ansprüche, wobei das Verfahren die Schritte umfasst, die in Folgendem bestehen:
i. Einsacken der Vorform (100), die zuvor auf der Matrize (110) drapiert wurde;
ii. Vakuumieren des Inneren der Einsackung;
iii. Übertragen der Matrize und der eingesackten Vorform auf den thermischen Block;
iv. Anwenden eines thermischen Zyklus zum Brennen bzw. Verfestigen auf die Vorform, indem die Temperatur der Vorform durch Aufheizen und Abkühlen des thermischen Blocks (160) reguliert wird.

9. Verfahren nach Anspruch 8, unter Verwendung einer Vorrichtung nach Anspruch 3, umfassend, zwischen den Schritten ii) und iv) einen Schritt, der darin besteht, den Druck in dem dichten Gehäuse (130) zu steigern.

## Claims

1. A device for curing or consolidating a textile preform (100) pre-impregnated with a polymer, said device comprising:
a. a matrix (110), without any heating or cooling means, comprising a moulding face that reproduces the shape of the textile preform and an assembly interface;
b. a sealed bagging (120) of the preform on the matrix;
c. means (111) to apply vacuum inside the bagging comprising the textile preform;
d. a thermal unit, comprising a base (150) comprising an induction circuit including one or more inductors (151) circulating in cavities made in said base (150), and connected to a high-frequency current generator and comprising:
di. a support (140) comprising a receiving interface and a heating interface cooperating with the assembly interface of the matrix for positioning the matrix (110) on said support (140) and for transferring heat between said matrix and said thermal unit, and a heating interface on a face opposite the receiving interface;
dii. a thermal accumulator (160) in contact with the base, heated by the induction circuit of said base;
diii. means for communicating heat from the thermal accumulator (160) to the support (140) through the heating interface of said support (140) .

2. The device according to claim 1, wherein the thermal unit comprises cooling means (141).

3. The device according to claim 1, comprising:
e. a sealed enclosure (130) and means to lock (131) said enclosure on the matrix (110);
f. means (132) to raise the pressure inside the sealed enclosure (130).

4. The device according to claim 2, wherein the cooling means comprise a circuit (141) for the circulation of heat-transfer fluid in the support (140).

5. The device according to claim 2, wherein the cooling means comprise a circuit for the circulation of heat-transfer fluid around the thermal accumulator (160).

6. The device according to claim 4, wherein the heating interface of the support (140) includes a conformation sheet (142).

7. The device according to any of claims 1 to 6, wherein the matrix assembly interface (110) comprises a conformation sheet (112).

8. A method for curing or consolidating a textile preform (100) pre-impregnated with a polymer, implementing a device according to any of the preceding claims, said method comprising the steps of:
i. bagging the preform (100) first laid up on the matrix (110) ;
ii. applying a vacuum to the inside of the bagging;
iii. transferring the matrix and the bagged preform on the thermal unit;
iv. applying a thermal cycle of curing and consolidation to the preform by regulating the temperature of the preform by heating and cooling the thermal unit (160).

9. The method according to claim 8, implementing a device according to claim 3, comprising, between steps ii) and iv), a step consisting in increasing the pressure in the sealed enclosure (130).
